# EUROPEAN PATENT APPLICATION

(11) **EP 4 765 257 A1**
(43) Date of publication of application: **24.06.2026**
(21) Application number: 25827191.5
(22) Date of filing: 05.06.2025
(51) Int. Cl.: H01M 4/70, H01M 50/533, H01M 10/058, H01M 50/536, H01M 50/591

(54) **ELECTRODE, ELECTRODE ASSEMBLY, AND SECONDARY BATTERY**

(30) Priority: 25.06.2024 KR 20240082648
(71) Applicant: LG Energy Solution, Ltd., Seoul 07335 (KR)
(72) Inventor: KWON, Hyuk Tae, Daejeon 34122 (KR); SONG, Byeong Min, Daejeon 34122 (KR); KIM, Kyoung Ha, Daejeon 34122 (KR); BAIK, Seo Yeon, Daejeon 34122 (KR); HAN, Se Hun, Daejeon 34122 (KR); PARK, Ju Yeon, Daejeon 34122 (KR)
(74) Representative: Plasseraud IP
(86) International application number: PCT/KR2025/007715
(87) International publication number: WO 2026/005329

(57) **Abstract**

An electrode according to an embodiment of the present disclosure may include a sheet portion; and a tab portion protruded from the sheet portion and disposed closer to a side in a width direction of the sheet portion. An edge of the tab portion may include an end line located at an outermost side of the tab portion; a first side line located at a side in a width direction of the tab portion; a second side line located at an opposite side in the width direction of the tab portion; a first connection line connecting the first side line to the sheet portion; and a second connection line connecting the second side line to the sheet portion, wherein the second connection line is longer than the first connection line.

## Description

### TECHNICAL FIELD

### CROSS-REFERENCE TO RELATED APPLICATIONS

The present application claims priority to Korean Patent Application No. 10-2024-0082648 filed June 25, 2024 in the Republic of Korea, the disclosure of which is incorporated herein by reference.

### TECHNICAL FIELD

The present disclosure relates to an electrode having a tab portion, an electrode assembly including a plurality of electrodes, and a secondary battery including the electrode assembly housed in an outer packaging.

### BACKGROUND ART

Recently, with rising prices of energy sources caused by depletion of fossil fuels and growing concerns about environmental pollution, the need for eco-friendly alternative energy sources is an essential factor for future life. In this circumstance, studies have been conducted on a variety of energy production technologies such as solar, wind and tidal energy, and energy storage devices such as batteries for using the produced electrical energy more efficiently are of great interest.

Moreover, with technology development and increasing demand for electronic mobile devices and electric vehicles using secondary batteries, the demand for secondary batteries as an energy source is rapidly increasing, and accordingly many studies are being conducted on secondary batteries that meet a variety of needs.

Secondary batteries may be classified into cylindrical secondary battery, pouch-type secondary battery and prismatic secondary battery according to the shape of an outer packaging. Among them, the pouch-type secondary battery may include an electrode assembly in which a positive electrode, a negative electrode and a separator are stacked, and a pouch-type outer packaging accommodating the electrode assembly. The electrode assembly may come in many different types such as a stack type, a jellyroll type or a stack-and-fold type. The electrode assembly may include the electrode and the separator arranged in an alternating manner. In particular, the electrode may have a tab portion connected to an electrode lead.

More recently, in keeping up with trends toward higher capacity and higher output, secondary batteries are manufactured with longer and thicker design to increase energy density. However, the existing electrodes experience a bottleneck phenomenon of high heat and stress concentrated at a specific part due to tabs having a small width relative to the width of the electrodes. In particular, high heat generated at the specific part may cause electrolyte decomposition and degradation of the electrode assembly, placing limitations on the application of high currents.

### SUMMARY

### TECHNICAL PROBLEM

The present disclosure is directed to providing an electrode capable of applying high currents without stress concentration, and an electrode assembly and a secondary battery including the same.

### TECHNICAL SOLUTION

An electrode according to an embodiment of the present disclosure may include a sheet portion; and a tab portion protruded from the sheet portion and disposed closer to a side in a width direction of the sheet portion. An edge of the tab portion may include an end line located at an outermost side of the tab portion; a first side line located at a side in a width direction of the tab portion; a second side line located at an opposite side in the width direction of the tab portion; a first connection line connecting the first side line to the sheet portion; and a second connection line connecting the second side line to the sheet portion, wherein the second connection line is longer than the first connection line.

The first connection line and the second connection line may include at least one of an arc shape having a constant radius of curvature, a curved line shape having a variable radius of curvature along an extension direction or a straight line shape inclined with respect to the end line.

A length of the first side line and the second side line may be equal to or more than 20% of a distance between an edge of the sheet portion and the end line.

The edge of the tab portion may further include a first arc line connecting the end line to the first side line; and a second arc line connecting the end line to the second side line. A radius of curvature of the first arc line may be equal to a radius of curvature of the second arc line.

The first connection line and the second connection line may include an arc shape having a larger radius of curvature than the radius of curvature of the first arc line and the second arc line.

A length of the first side line may be equal to or larger than a length of the second side line.

A virtual reference line extended from an edge of the sheet portion, a first virtual side line extended from the first side line, a second virtual side line extended from the second side line, a first virtual arc line connecting the virtual reference line to the first virtual side line and having a radius of curvature that is equal to the radius of curvature of the first arc line, and a second virtual arc line connecting the virtual reference line to the second virtual side line and having a radius of curvature that is equal to the radius of curvature of the second arc line may be defined. The tab portion may include a basic region surrounded by the end line, the first and second arc lines, the first and second side lines, the first and second virtual side lines, the first and second virtual arc lines and the virtual reference line; a first extended region surrounded by the first connection line, the virtual reference line, the first virtual side line and the first virtual arc line; and a second extended region surrounded by the second connection line, the virtual reference line, the second virtual side line and the second virtual arc line.

A sum of areas of the first extended region and the second extended region may range from 3% to 40% of an area of the basic region.

An electrode assembly according to an embodiment of the present disclosure may include a plurality of electrodes; and a separator positioned between the plurality of electrodes. The electrode may include a sheet portion; and a tab portion protruded from the sheet portion and disposed closer to a side in a width direction of the sheet portion. An edge of the tab portion may include an end line located at an outermost side of the tab portion; a first side line located at a side in a width direction of the tab portion; a second side line located at an opposite side in the width direction of the tab portion; a first connection line connecting the first side line to the sheet portion; and a second connection line connecting the second side line to the sheet portion, wherein the second connection line is longer than the first connection line.

The electrode assembly may further include an electrode lead welded to the tab portion; and a cover member covering a welding portion where the electrode lead and the tab portion are welded together. The cover member may cover at least a part of the first connection line and the second connection line.

With respect to a protrusion direction of the tab portion, a distance between an outer end of the welding portion and an outer end of the first connection line and a distance between the outer end of the welding portion and an outer end of the second connection line may be equal to or less than 20% of a protrusion length of the tab portion.

A secondary battery according to an embodiment of the present disclosure may include an electrode assembly including a plurality of electrodes and a separator positioned between the plurality of electrodes; and an outer packaging including an accommodation portion accommodating the electrode assembly and a sealing portion disposed around the accommodation portion. The electrode may include a sheet portion; and a tab portion protruded from the sheet portion and disposed closer to a side in a width direction of the sheet portion. An edge of the tab portion may include an end line located at an outermost side of the tab portion; a first side line located at a side in a width direction of the tab portion; a second side line located at an opposite side in the width direction of the tab portion; a first connection line connecting the first side line to the sheet portion; and a second connection line connecting the second side line to the sheet portion, wherein the second connection line is longer than the first connection line.

The first connection line and the second connection line may be disposed at a distance of 2.5 mm or more from the sealing portion of the outer packaging.

### ADVANTAGEOUS EFFECTS

According to the exemplary embodiment of the present disclosure, the tab portion may further include the extended region on two sides, compared to the existing tab portion. Accordingly, the sheet-side width of the tab portion may be increased and the area may be increased. Thus, the heat dissipation performance of the tab portion may be improved, and higher currents may be applied. In other words, the electrode has advantages of reducing the Quick Charge (QC) time through the application of high currents, and improving the output.

Besides, the effects of the embodiments of the present disclosure may include effects that can be easily predicted by those skilled in the art from the configurations according to the exemplary embodiments of the present disclosure.

### BRIEF DESCRIPTION OF THE DRAWINGS

The accompanying drawings illustrate the exemplary embodiments of the present disclosure and together with the following detailed description, serve to provide a better understanding of the technical aspects of the present disclosure, and thus the present disclosure should not be construed as being limited to the drawings.
FIG. 1 is a perspective view of a secondary battery according to an embodiment of the present disclosure.
FIG. 2 is a cross-sectional view of FIG. 1, taken along the line A-A'.
FIG. 3 is a plan view of an electrode assembly according to an embodiment of the present disclosure.
FIG. 4 is an enlarged plan view showing a tab portion of an electrode according to an embodiment of the present disclosure and components near it.
FIG. 5 is a plan view showing that an electrode lead welded to the tab portion of FIG. 4 passes through a sealing portion of an outer packaging.
FIG. 6 is an enlarged plan view showing a tab portion of an electrode according to another embodiment of the present disclosure and components near it.
FIG. 7 is an enlarged plan view showing a tab portion of an electrode according to still another embodiment of the present disclosure and components near it.

### DETAILED DESCRIPTION

Hereinafter, exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

In the drawings, each component of a secondary battery according to an embodiment of the present disclosure is schematically depicted, and the size of the component or the thickness of the line may be somewhat exaggerated for convenience of understanding.

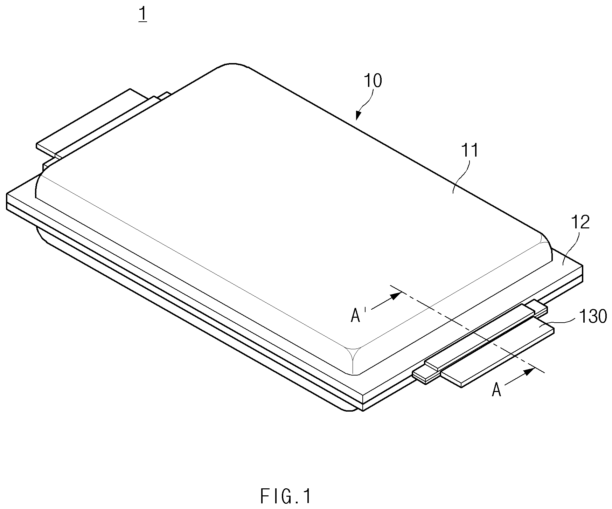

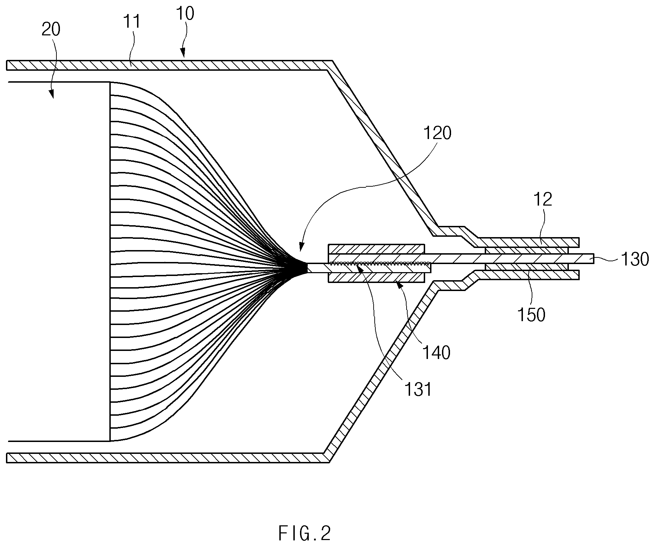

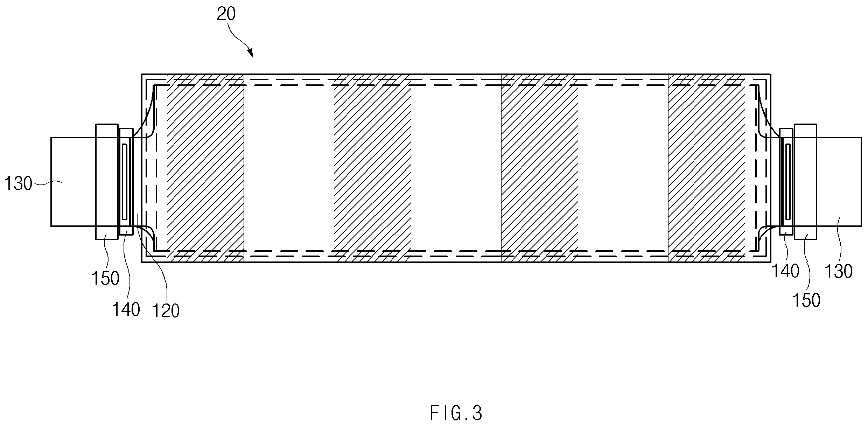

FIG. 1 is a perspective view of the secondary battery according to an embodiment of the present disclosure, FIG. 2 is a cross-sectional view of FIG. 1, taken along the line A-A', and FIG. 3 is a plan view of an electrode assembly according to an embodiment of the present disclosure.

The secondary battery 1 may include an outer packaging 10 and an electrode assembly 20 housed in the outer packaging 10.

The outer packaging 10 may be manufactured by forming a laminate film. More specifically, the outer packaging 10 may include an accommodation portion 11 in which the electrode assembly 20 is received, and a sealing portion 12 disposed around the accommodation portion 11. The accommodation portion 11 may have a recessed shape. The accommodation portion 11 having a cup-like shape may be referred to as a cup portion.

The outer packaging 10 may include a pair of cases, and at least one of the cases may have the recessed accommodation portion 11. The sealing portion 12 may be formed by sealing the area around the accommodation portion 11 by heat fusion in a state in which the pair of cases face each other with the electrode assembly 20 positioned therebetween. The pair of cases may be connected with a folding portion on one side, or may be separated from each other. This is well known in the art, and its detailed description is omitted.

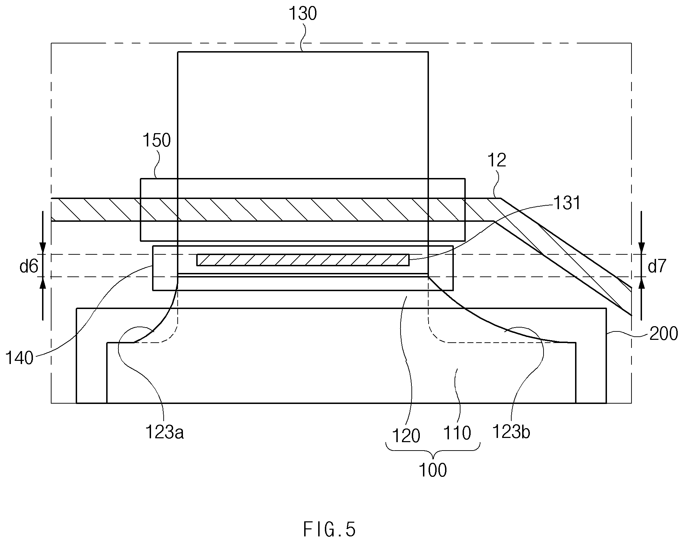

The electrode assembly 20 may include a plurality of electrodes 100 and a separator 200 positioned between the plurality of electrodes 100 (see FIG. 5). More specifically, the electrode assembly 20 may include the plurality of electrodes 100, and the separator 200 positioned between the plurality of electrodes 100 to insulate the plurality of electrodes from each other. The electrode assembly 20 may be housed in the accommodation portion 11 of the outer packaging 10 together with an electrolyte solution.

The electrode assembly 20 is not limited to a particular type, and may include a stack type, a jellyroll type or a stack-and-fold type.

Each of the plurality of electrodes 100 included in the electrode assembly 20 may have a tab portion 120. The tab portion 120 may act as pathway, along which electrons may move between inside and outside of the electrode assembly 20.

The plurality of tab portions 120 of the plurality of electrodes 100 may be welded together, and this process may be referred to as pre-welding. The pre-welding may be performed by ultrasonic welding, laser welding or resistance welding.

More specifically, the electrode assembly 20 may include a plurality of positive electrode tabs joined together and a plurality of negative electrode tabs joined together. The positive electrode tabs and the negative electrode tabs may be protruded from the electrode assembly 20 in different directions, but the present disclosure is not limited thereto and they may be protruded in various directions, and for example, may be protruded side by side in the same direction from one side.

The electrode assembly 20 may include an electrode lead 130 welded to the plurality of tab portions 120. The electrode lead 130 may act as pathway for the flow of current between the electrode assembly 20 and an external load, together with the tab portions 120.

More specifically, the electrode assembly 20 may include a positive electrode lead welded to the plurality of positive electrode tabs, and a negative electrode lead welded to the plurality of negative electrode tabs. The positive electrode lead and the negative electrode lead may be protruded from the electrode assembly 20 in different directions, or may be protruded side by side in the same direction, according to the protrusion location of the positive electrode tabs and the negative electrode tabs.

The electrode lead 130 may be protruded outward through the sealing portion 12 of the outer packaging 10. More specifically, an outer end of the electrode lead 130 may be located outside of the outer packaging 10, and an inner end of the electrode lead 130 may be welded to the tab portion 120.

The electrode lead 130 may be welded to the outermost tab portion 120 of the plurality of tab portions 120. That is, the electrode lead 130 may be welded to one of the two surfaces in the thickness direction of a pre-welding portion where the plurality of tab portions 120 are welded together. However, the present disclosure is not limited thereto, and the electrode lead 130 may be welded between some of the plurality of tab portions 120 and the others.

The process of welding the electrode lead 130 and the plurality of tab portions 120 may be referred to as main-welding. The main-welding may be performed by ultrasonic welding, laser welding or resistance welding.

A welding portion 131 where the plurality of tab portions 120 and the electrode lead 130 are welded together may be surrounded by a cover member 140. The welding portion 131 may be where the plurality of tab portions 120 are welded together.

The cover member 140 may have an insulating material. For example, the cover member 140 may include an insulating tape.

A part of the electrode lead 130 may be surrounded by an insulation member 150. The insulation member 150 may be located at the outer position than the cover member 140 with respect to the length direction of the electrode lead 130.

The insulation member 150 may surround the part of the electrode lead 130 at a location corresponding to the sealing portion 12, and may be joined to the inner surface of the sealing portion 12 by heat. Thus, the electrode lead 130 and the outer packaging 10 may be insulated from each other, while maintaining the sealing of the sealing portion 12 by the insulation member 150.

The insulation member 150 may be manufactured as an insulator having a nonconductive property that does not conduct electricity. The insulation member 150 generally includes an insulating tape that is easy to attach to the electrode lead 130 and has a relatively small thickness, but is not limited thereto and may include various members that insulate the electrode lead 130.

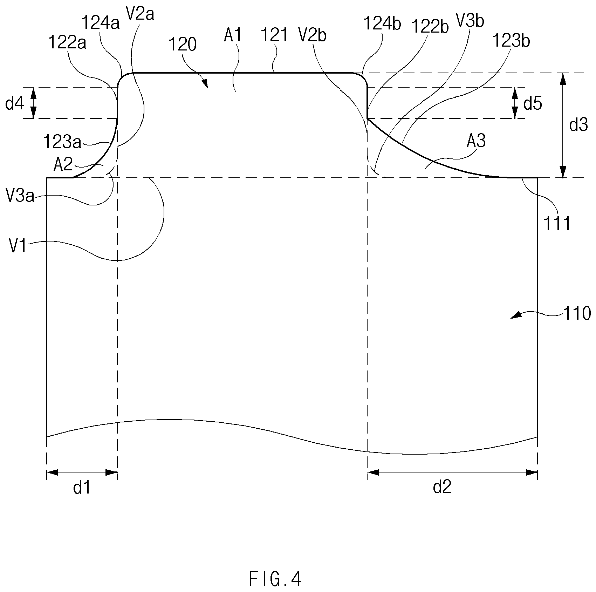

FIG. 4 is an enlarged plan view showing the tab portion of the electrode according to an embodiment of the present disclosure and components near it, and FIG. 5 is a plan view showing that the electrode lead welded to the tab portion of FIG. 4 passes through the sealing portion of the outer packaging.

The electrode 100 according to an embodiment of the present disclosure may include a sheet portion 110 and the tab portion 120.

The electrode 100 may be a positive electrode or a negative electrode.

The sheet portion 110 may be formed by stacking a laminate layer on a current collector. That is, the sheet portion 110 may be a coated portion of the electrode 100. The material and configuration of the current collector and the laminate layer are well known in the art, and its detailed description is omitted.

The sheet portion 110 may have a sheet shape having a predetermined width and length.

The tab portion 120 may be protruded from the sheet portion 110. For more details of the function of the tab portion 120, reference is made to the foregoing.

The edge of the tab portion 120 may include an end line 121, a first side line 122a and a second side line 122b.

The end line 121 may be located at the outermost side of the tab portion 120. That is, the end line 121 may be the edge of the most protruding part of the tab portion 120. The end line 121 may be a straight line parallel to the edge 111 of the sheet portion 110.

The two side lines 122a, 122b may be located at two sides in the width direction of the tab portion 120. More specifically, the first side line 122a may be located at one side in the width direction of the tab portion 120, and the second side line 122b may be located at the other side in the width direction of the tab portion 120. The two side lines 122a, 122b may be straight lines perpendicular to the edge 111 of the sheet portion 110.

The edge of the tab portion 120 may further include a first arc line 124a and a second arc line 124b.

The first arc line 124a may connect the end line 121 to the first side line 122a. The second arc line 124b may connect the end line 121 to the second side line 122b. Each arc line 124a, 124b may be a curved line having a constant radius of curvature. The radius of curvature of the first arc line 124a may be equal to the radius of curvature of the second arc line 124a.

The edge of the tab portion 120 may include a first connection line 123a and a second connection line 123b.

The first connection line 123a may connect the first side line 122a to the sheet portion 110. More specifically, the first connection line 123a may connect the first side line 122a to the edge 111 of the sheet portion 110.

The second connection line 123b may connect the second side line 122b to the sheet portion 110. More specifically, the second connection line 123b may connect the second side line 122b to the edge 111 of the sheet portion 110.

In the case of this embodiment, the first connection line 123a and the second connection line 123b may include a curved line shape having the radius of curvature that changes along the extension direction. In other words, each connection line 123a, 123b may include a concave curved line shape having an inconstant radius of curvature.

Generally, in the existing electrode, the two side lines of the tab portion and the edge of the sheet portion are connected by connection lines having a constant radius of curvature. For example, each virtual arc line V3a, V3b shown in FIG. 4 may correspond to the connection line of the existing electrode and have a constant radius of curvature.

In contrast, the first connection line 123a and the second connection line 123b according to this embodiment may be located at the outer position than the virtual arc lines V3a, V3b, respectively, and the radius of curvature may change along the extension direction.

By the above-described configuration, the tab portion 120 according to this embodiment may further include extended regions A2, A3 on two sides, compared to the existing tab portion. Accordingly, the tab portion 120 may have the increased width on the sheet portion 110 side and the increased area. Thus, the heat dissipation performance of the tab portion 120 may be improved, and higher currents may be applied. That is, the electrode 100 has advantages of reducing the Quick Charge (QC) time through the application of high currents, and improving the output.

More specifically, the tab portion 120 may include a basic region A1, the first extended region A2 and the second extended region A3. To clearly define each region A1, A2, A3, a virtual reference line V1, a first virtual side line V2a, a second virtual side line V2b, the first virtual arc line V3a and the second virtual arc line V3b may be defined.

The virtual reference line V1 may extend from the edge 111 of the sheet portion 110. That is, the virtual reference line V1 may be a straight line located on the same line as the edge 111 of the sheet portion 110.

The first virtual side line V2a may extend from the first side line 122a, and the second virtual side line V2b may extend from the second side line 122b. That is, the virtual side lines V2a, V2b may be straight lines located on the same line as the side lines 122a, 122b, respectively.

The first virtual arc line V3a may connect the virtual reference line V1 to the first virtual side line V2a, and the second virtual arc line V3b may connect the virtual reference line V1 to the second virtual side line V2b. Each virtual arc line V3a, V3b may be a curved line having a constant radius of curvature. The first virtual arc line V3a may have the same radius of curvature as the radius of curvature of the first arc line 124a, and the second virtual arc line V3b may have the same radius of curvature as the radius of curvature of the second arc line 124b.

The basic region A1 of the tab portion 120 may be a region corresponding to the existing tab portion. More specifically, the basic region A1 may be a region surrounded by the end line 121, the first and second arc lines 124a, 124b, the first and second side lines 122a, 122b, the first and second virtual side lines V2a, V2b, the first and second virtual arc lines V3a, V3b, and the virtual reference line V1.

The first and second extended regions A2, A3 of the tab portion 120 may be the extended regions, compared to the existing tab portion. More specifically, the first extended region A2 of the tab portion 120 may be a region surrounded by the first connection line 123a, the virtual reference line V1, the first virtual side line V2a and the first virtual arc line V3a. The second extended region A3 of the tab portion 120 may be a region surrounded by the second connection line 123b, the virtual reference line V1, the second virtual side line V2b and the second virtual arc line V3b.

By the first and second extended regions A2, A3, as described above, the heat dissipation performance of the tab portion 120 may be improved, and higher currents may be applied.

The sum of areas of the first extended region A2 and the second extended region A3 (hereinafter, 'extended region') may range from 3% to 40% of the area of the basic region A1. When the extended region is smaller than 3% of the area of the basic region A1, performance improvement may be somewhat insignificant. When the extended region is larger than 40% of the area of the basic region A1, there is a risk that the extended region A2, A3 may interfere with the sealing portion 12 of the outer packaging 10.

Meanwhile, the tab portion 120 may be disposed closer to one side in the width direction of the sheet portion 110. More specifically, a distance d1 between one edge in the width direction of the sheet portion 110 and the first side line 122a may be smaller than a distance d2 between the other edge in the width direction of the sheet portion 110 and the second side line 122b. Here, the second connection line 123b of the tab portion 120 may be longer than the first connection line 123a. That is, the area of the second extended region A3 may be wider than the area of the first extended region A2.

Accordingly, it may be possible to increase the area of the tab portion 120 while maintaining the length of each side line 122a, 122b at a predetermined level.

A length d4 of the first side line 122a may be equal to or larger than a length d5 of the second side line 122b. As described above, because the area of the second extended region A3 is larger than the area of the first extended region A2, even when the length d5 of the second side line 122b is equal to or smaller than the length d4 of the first side line 122a, the area of the second extended region A3 may be at or above a predetermined level. FIG. 4 shows an embodiment in which the length d4 of the first side line 122a is equal to the length d5 of the second side line 122b.

The first side line 122a and the second side line 122b may have the lengths d4, d5 that form a predetermined straight line section.

In relation to this, a process of manufacturing the electrode assembly 20 may include a process of laminating the electrode 100 and the separator 200, and a process of inspecting misplacement of the electrode 100 with respect to the separator 200. A sensor used to inspect the misplacement of the electrode 100 may perform inspection on the basis of the edge of the electrode 100. Accordingly, as the edge of the electrode 100 has a larger number of straight line sections and the straight line section is longer, inspection precision may be improved. That is, when the first and second side lines 122a, 122b have the predetermined lengths d4, d5, precision in the misplacement inspection of the electrode 100 may be improved.

More specifically, the length d4 of the first side line 122a and the length d5 of the second side line 122b may be equal to or more than 20% of a distance d3 between the edge 111 of the sheet portion 110 and the end line 121 of the tab portion 120. When the length d4 of the first side line 122a and the length d5 of the second side line 122b are smaller than 20% of the distance d3, precision in the misplacement inspection of the electrode 100 may be lower.

As an experimental example, an analysis simulation was performed at varying length d4, d5 of the side line 122a, 122b. In the case of cathode, when the length d4, d5 of the side line 122a, 122b was 4.5 mm, the measured notching portion stress was 23.0 MPa and the measured welding portion stress was 70.6 MPa, and when the length d4, d5 of the side line 122a, 122b was 8 mm, the measured notching portion stress was 50.8 MPa and the measured welding portion stress was 60.5 MPa. In the case of anode, when the length d4, d5 of the side line 122a, 122b was 4.5 mm, the measured notching portion stress was 35.0 MPa and the measured welding portion stress was 113.9 MPa, and when the length d4, d5 of the side line 122a, 122b was 8 mm, the measured notching portion stress was 64.6 MPa and the measured welding portion stress was 98.2 MPa. Here, the notching portion stress may refer to stress measured at the boundary between the side line 122a, 122b and the connection line 123a, 123b of the tab portion 120. In addition, the welding portion stress may refer to stress measured at the end of the welding portion 131 where the plurality of tab portions 120 are welded together.

That is, it can be seen that as the length d4, d5 of the side line 122a, 122b is shorter, notching portion stress decreases and the welding portion stress increases. Accordingly, to prevent excessive increase in the notching portion stress and welding portion stress, the length d4, d5 of the side line 122a, 122b may be appropriately selected within the range between 4.5 mm and 8 mm.

Meanwhile, as described above, the cover member 140 may cover the welding portion 131 where the plurality of tab portions 120 and the electrode lead 130 are welded together.

Here, the cover member 140 may cover at least a part of the first connection line 123a and the second connection line 123b of the tab portion 120. For example, as shown in FIG. 5, the cover member 140 may cover a part of each connection line 123a, 123b on the electrode lead 130 side. Accordingly, the cover member 140 may relieve the notching portion stress applied to the tab portion 120, and prevent a short circuit from the boundary between the side line 122a, 122b and the connection line 123a, 123b due to the notching portion stress.

Meanwhile, the outer end of the connection line 123a, 123b may be located within a predetermined distance from the welding portion 131. The outer end of the connection line 123a, 123b may refer to the boundary between the connection line 123a, 123b and the side line 122a, 122b.

More specifically, with respect to the protrusion direction of the tab portion 120, a distance d6 between the outer end of the welding portion 131 and the outer end of the first connection line 123a and a distance d7 between the outer end of the welding portion 131 and the outer end of the second connection line 123b may be equal to or less than 20% of the protrusion length d3 of the tab portion 120. The protrusion length d3 of the tab portion 120 may be the distance between the edge 111 of the sheet portion 110 and the end line 121 of the tab portion 120.

Accordingly, because the length d4, d5 of the side line 122a, 122b of the tab portion 120 is reduced to the predetermined level, it may be possible to keep the notching portion stress relatively low, and prevent a short circuit from the edge of the tab portion 120. In addition, the cover member 140 having the optimal size may easily cover the welding portion 131 and the outer end of the connection line 123a, 123b together.

Meanwhile, to prevent the interference of the tab portion 120, particularly the extended region A2, A3 of the tab portion 120 with the sealing portion 12 of the outer packaging 10, the first and second connection lines 123a, 123b of the tab portion 120 may be disposed at a predetermined distance from the sealing portion 120 of the outer packaging 10. Preferably, the first and second connection lines 123a, 123b may be disposed at the distance of 2.5 mm or more from the sealing portion 120 of the outer packaging 10.

The sealing portion 12 may be formed and extended around the outer packaging. The first and second connection lines 123a, 123b may be located at the distance of 2.5 mm or more from the sealing portion 120 over the entire length of the sealing portion 12.

Accordingly, it may be possible to prevent the risk that the tab portion 120 will interfere with the sealing portion 12 of the outer packaging 10, and form the sealing portion 12 with reliability.

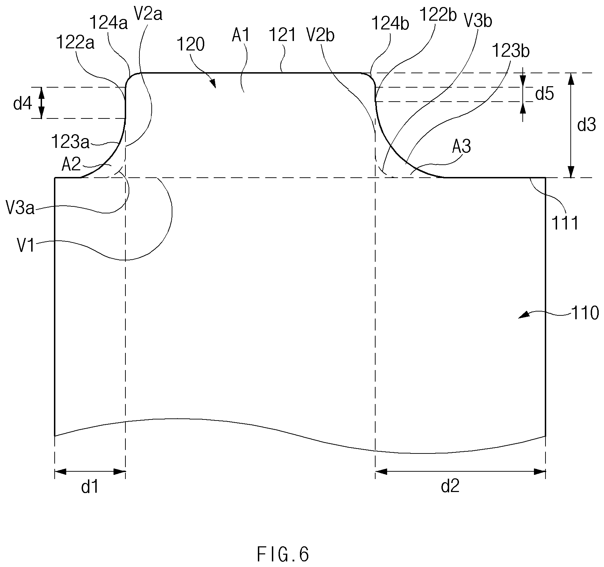

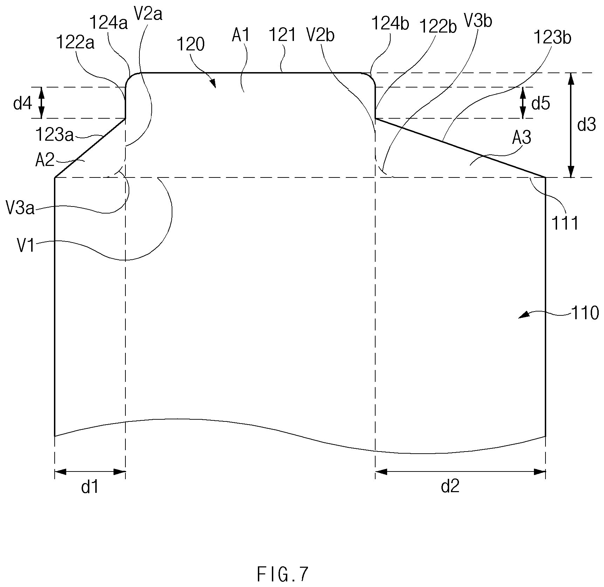

FIG. 6 is an enlarged plan view showing the tab portion of the electrode according to another embodiment of the present disclosure and components near it, and FIG. 7 is an enlarged plan view showing the tab portion of the electrode according to still another embodiment of the present disclosure and components near it.

To avoid repeating details that have been described above, difference(s) will be described below.

The first and second connection lines 123a, 123b may be formed with various shapes.

As an example, referring to FIG. 6, the first and second connection lines 123a, 123b may have an arc shape having a constant radius of curvature. The first and second connection lines 123a, 123b may have a concave arc shape. More specifically, the first connection line 123a and the second connection line 123b may include an arc shape having a larger radius of curvature than the radius of curvature of the first arc line 124a and the second arc line 124b.

As another example, referring to FIG. 7, the first and second connection lines 123a, 123b may have a straight line shape inclined with respect to the end line 121.

However, the present disclosure is not limited thereto, and the first and second connection lines 123a, 123b may include an appropriate combination of the previous embodiments. That is, the first and second connection lines 123a, 123b may include at least one of the arc shape having the constant radius of curvature (FIG. 6), the curved line shape having the variable radius of curvature along the extension direction (FIG. 4) or the straight line shape inclined with respect to the end line (FIG. 7).

Meanwhile, as described above, the length d4 of the first side line 122a may be equal to or larger than the length d5 of the second side line 122b. FIG. 6 shows an embodiment in which the length d4 of the first side line 122a is longer than the length d5 of the second side line 122b, and FIG. 7 shows an embodiment in which the length d4 of the first side line 122a is equal to the length d5 of the second side line 122b.

The above description has been made to describe the technical aspects of the present disclosure by way of example, and persons having ordinary skill in the technical field pertaining to the present disclosure would have made a variety of modifications and changes without departing from the essential features of the present disclosure.

Therefore, the disclosed embodiments are provided to describe the technical aspects of the present disclosure but not intended to be limiting, and the technical scope of the present disclosure is not limited by these embodiments.

The scope of protection of the present disclosure should be interpreted by the appended claims, and it should be interpreted that all the technical aspects within the equivalent scope are included in the scope of protection of the present disclosure.

**[List of Reference Numerals]**

| | | | |
|---|---|---|---|
| 1: | Secondary battery | 10: | Outer packaging |
| 11: | Accommodation portion | 12: | Sealing portion |
| 20: | Electrode assembly | 100: | Electrode |
| 110: | Sheet portion | 111: | Edge (of sheet portion) |
| 120: | Tab portion | 121: | End line |
| 122a: | First side line | 122b: | Second side line |
| 123a: | First connection line | 123b: | Second connection line |
| 124a: | First arc line | 124b: | Second arc line |
| 130: | Electrode lead | 131: | Welding portion |
| 140: | Cover member | 150: | Insulation member |
| 200: | Separator | A1: | Basic region |
| A2: | First extended region | A3: | Second extended region |
| V1: | Virtual reference line | V2a: | First virtual side line |
| V2b: | Second virtual side line | V3a: | First virtual arc line |
| V3b: | Second virtual arc line | | |

## Claims

1. An electrode comprising:
a sheet portion; and
a tab portion protruded from the sheet portion and disposed closer to a side in a width direction of the sheet portion,
wherein an edge of the tab portion includes:
an end line located at an outermost side of the tab portion;
a first side line located at a side in a width direction of the tab portion;
a second side line located at an opposite side in the width direction of the tab portion;
a first connection line connecting the first side line to the sheet portion; and
a second connection line connecting the second side line to the sheet portion, wherein the second connection line is longer than the first connection line.

2. The electrode according to claim 1,
wherein the first connection line and the second connection line include at least one of an arc shape having a constant radius of curvature, a curved line shape having a variable radius of curvature along an extension direction or a straight line shape inclined with respect to the end line.

3. The electrode according to claim 1,
wherein a length of the first side line and the second side line is equal to or more than 20% of a distance between an edge of the sheet portion and the end line.

4. The electrode according to claim 1,
wherein the edge of the tab portion further includes:
a first arc line connecting the end line to the first side line; and
a second arc line connecting the end line to the second side line, and
wherein a radius of curvature of the first arc line is equal to a radius of curvature of the second arc line.

5. The electrode according to claim 4,
wherein the first connection line and the second connection line include an arc shape having a larger radius of curvature than the radius of curvature of the first arc line and the second arc line.

6. The electrode according to claim 1,
wherein a length of the first side line is equal to or larger than a length of the second side line.

7. The electrode according to claim 4,
wherein by definition of a virtual reference line extended from an edge of the sheet portion, a first virtual side line extended from the first side line, a second virtual side line extended from the second side line, a first virtual arc line connecting the virtual reference line to the first virtual side line and having a radius of curvature that is equal to the radius of curvature of the first arc line, and a second virtual arc line connecting the virtual reference line to the second virtual side line and having a radius of curvature that is equal to the radius of curvature of the second arc line,
the tab portion includes:
a basic region surrounded by the end line, the first and second arc lines, the first and second side lines, the first and second virtual side lines, the first and second virtual arc lines and the virtual reference line;
a first extended region surrounded by the first connection line, the virtual reference line, the first virtual side line and the first virtual arc line; and
a second extended region surrounded by the second connection line, the virtual reference line, the second virtual side line and the second virtual arc line.

8. The electrode according to claim 7,
wherein a sum of areas of the first extended region and the second extended region ranges from 3% to 40% of an area of the basic region.

9. An electrode assembly comprising:
a plurality of electrodes; and
a separator positioned between the plurality of electrodes,
wherein the electrode includes:
a sheet portion; and
a tab portion protruded from the sheet portion and disposed closer to a side in a width direction of the sheet portion,
wherein an edge of the tab portion includes:
an end line located at an outermost side of the tab portion;
a first side line located at a side in a width direction of the tab portion;
a second side line located at an opposite side in the width direction of the tab portion;
a first connection line connecting the first side line to the sheet portion; and
a second connection line connecting the second side line to the sheet portion, wherein the second connection line is longer than the first connection line.

10. The electrode assembly according to claim 9, further comprising:
an electrode lead welded to the tab portion; and
a cover member covering a welding portion where the electrode lead and the tab portion are welded together,
wherein the cover member covers at least a part of the first connection line and the second connection line.

11. The electrode assembly according to claim 10,
wherein with respect to a protrusion direction of the tab portion, a distance between an outer end of the welding portion and an outer end of the first connection line and a distance between the outer end of the welding portion and an outer end of the second connection line are equal to or less than 20% of a protrusion length of the tab portion.

12. A secondary battery comprising:
an electrode assembly including a plurality of electrodes and a separator positioned between the plurality of electrodes; and
an outer packaging including an accommodation portion accommodating the electrode assembly and a sealing portion disposed around the accommodation portion,
wherein the electrode includes:
a sheet portion; and
a tab portion protruded from the sheet portion and disposed closer to a side in a width direction of the sheet portion, and
wherein an edge of the tab portion includes:
an end line located at an outermost side of the tab portion;
a first side line located at a side in a width direction of the tab portion;
a second side line located at an opposite side in the width direction of the tab portion;
a first connection line connecting the first side line to the sheet portion; and
a second connection line connecting the second side line to the sheet portion, wherein the second connection line is longer than the first connection line.

13. The secondary battery according to claim 12,
wherein the first connection line and the second connection line are disposed at a distance of 2.5 mm or more from the sealing portion of the outer packaging.
